# DEMANDE DE BREVET EUROPEEN

(11) **EP 0 894 677 A1**
(43) Date de publication de la demande: **03.02.1999**
(21) Numéro de dépôt: 98401931.5
(22) Date de dépôt: 28.07.1998
(51) Int. Cl.: B60R 19/40

(54) **Agencement d'une poutre de pare-chocs dans un véhicule automobile**

(30) Priorité: 28.07.1997 FR 9709590
(71) Demandeur: ECIA - EQUIPEMENTS ET COMPOSANTS POUR L'INDUSTRIE AUTOMOBILE, F-25400 Audincourt (FR)
(72) Inventeur: Bebin, Mark, 01800 Meximieux (FR); Rapy, Pierre-Yves, 90000 Belfort (FR)
(74) Mandataire: de la Bigne, Guillaume Michel Marie

(57) **Abrégé**

Cette poutre (14) est reliée à un support fixe du véhicule par des moyens (18) de déplacement longitudinal de cette poutre (14) comportant au moins un vérin fluidique (20) muni d'une extrémité fixe, formant corps (22), reliée au support fixe, et d'une extrémité mobile, formant tige (24), reliée à la poutre (14). La tige (24) est déplaçable entre des première et seconde positions respectivement de repos et de déploiement de la poutre (14). L'agencement comporte des moyens anti-retour (54) interdisant le retour intempestif de la tige (24) vers sa première position, notamment lorsque la poutre subit un choc. De préférence, les moyens anti-retour (54) comprennent deux cames de blocage articulées (56) coopérant avec la tige (24). Le vérin (20) est actionné, par exemple, par le liquide sous pression d'un circuit hydraulique (32) du véhicule, notamment d'un circuit hydraulique de direction assistée du véhicule.

## Description

La présente invention concerne un agencement d'une poutre de pare-chocs dans un véhicule automobile.

On connaît déjà dans l'état de la technique un véhicule automobile à pare-chocs avant déployable dans lequel, en cas de risque de choc, le pare-chocs se déplace longitudinalement depuis une position de repos jusqu'à une position déployée. Dans cette dernière position, la longueur du véhicule est augmentée, ce qui permet d'absorber une plus grande quantité d'énergie de choc.

EP-A-0 535 175 décrit un agencement d'une poutre de pare-chocs dans un véhicule automobile, du type dans lequel la poutre est reliée à un support fixe du véhicule par des moyens de déplacement longitudinal de cette poutre comportant au moins un vérin fluidique muni d'une extrémité fixe, formant corps, reliée au support fixe, et d'une extrémité mobile, formant tige, reliée à la poutre, la tige étant déplaçable entre des première et seconde positions respectivement de repos et de déploiement de la poutre.

Dans les exemples illustrés sur les figures 1 à 7 de ce document, le vérin est hydraulique. Le liquide sous pression d'actionnement du vérin est utilisé pour amortir l'énergie des chocs subis par le pare-chocs. Pour bénéficier de l'effet d'amortissement du liquide sous pression, il est nécessaire que le vérin soit relativement volumineux. Par ailleurs , pour des chocs se produisant à des vitesses atteignant 15 km/h, le circuit hydraulique de commande du vérin se détériore en empêchant tout effet d'amortissement du liquide sous pression.

L'invention a pour but de proposer un pare-chocs déployable à l'aide de vérins fluidiques simples et peu volumineux, permettant de protéger efficacement les organes essentiels du véhicule lors de chocs se produisant à des vitesses pouvant atteindre 15 km/h.

A cet effet, l'invention a pour objet un agencement d'une poutre de pare-chocs dans un véhicule automobile, du type précité, **caractérisé en ce qu**'il comporte des moyens anti-retour interdisant le retour intempestif de la tige vers sa première position, notamment lorsque la poutre subit un choc, et des moyens de libération des moyens anti-retour pour autoriser le retour contrôlé de la tige vers sa première position.

Suivant d'autres caractéristiques de l'invention:
- les moyens anti-retour comprennent deux cames de blocage articulées autour d'axes fixes, entre lesquelles s'étend la tige du vérin, ces cames de blocage coopérant avec la tige, de préférence avec deux méplats sensiblement diamétralement opposés de cette tige, de manière à, d'une part, s'écarter entre elles librement lorsque la tige se déplace vers sa seconde position, et d'autre part, serrer la tige entre elles pour la bloquer par effet d'arc-boutement lorsque cette tige est sollicitée vers sa première position;
- les moyens de libération comprennent des moyens d'écartement forcé des cames de blocage ;
- les moyens d'écartement comprennent une platine rotative couplée par deux tringleries de transmission de mouvement aux deux cames de blocage respectivement, la platine étant déplaçable, au moyen d'un organe d'entraînement, notamment un électro-aimant, entre des positions d'écartement et de serrage des cames de blocage, l'organe d'entraînement exerçant un couple résistant s'opposant à l'écartement des cames de blocage lorsque celles-ci sont en position de serrage ;
- le vérin est un vérin hydraulique à double effet actionné par le liquide sous pression d'un circuit hydraulique primaire du véhicule, notamment un circuit hydraulique de direction assistée du véhicule ;
- le vérin est commandé par un circuit hydraulique secondaire raccordé au circuit hydraulique primaire par l'intermédiaire d'un compresseur-détendeur ;
- le circuit hydraulique secondaire comporte un accumulateur de pression raccordé alternativement à une ou deux chambres du vérin, par l'intermédiaire d'un distributeur commandé par une unité centrale de gestion des déplacements de la poutre ;
- les moyens de déplacement longitudinal de la poutre comprennent deux vérins hydrauliques commandés par deux circuits hydrauliques secondaires respectifs identiques raccordés au circuit hydraulique primaire par un compresseur-détendeur commun ;
- le vérin, ou chaque vérin, est porté par un longeron du véhicule, et, de préférence, est logé à l'intérieur de ce longeron.

L'invention sera mieux comprise à la lecture de la description qui va suivre donnée uniquement à titre d'exemple et faite en se référant aux dessins dans lesquels:
- la figure 1 est une vue schématique d'une poutre de pare-chocs agencée, selon l'invention, dans un véhicule automobile ;
- la figure 2 est une vue en coupe longitudinale d'un vérin de déplacement de la poutre illustrée sur la figure 1 ;
- la figure 3 est une vue en perspective du vérin illustré sur la figure 2 ;
- les figures 4 et 5 sont des vues de détail, à échelle agrandie, des cames de blocage de la tige du vérin illustré sur la figure 2, montrant ces cames en position de serrage et d'écartement respectivement.

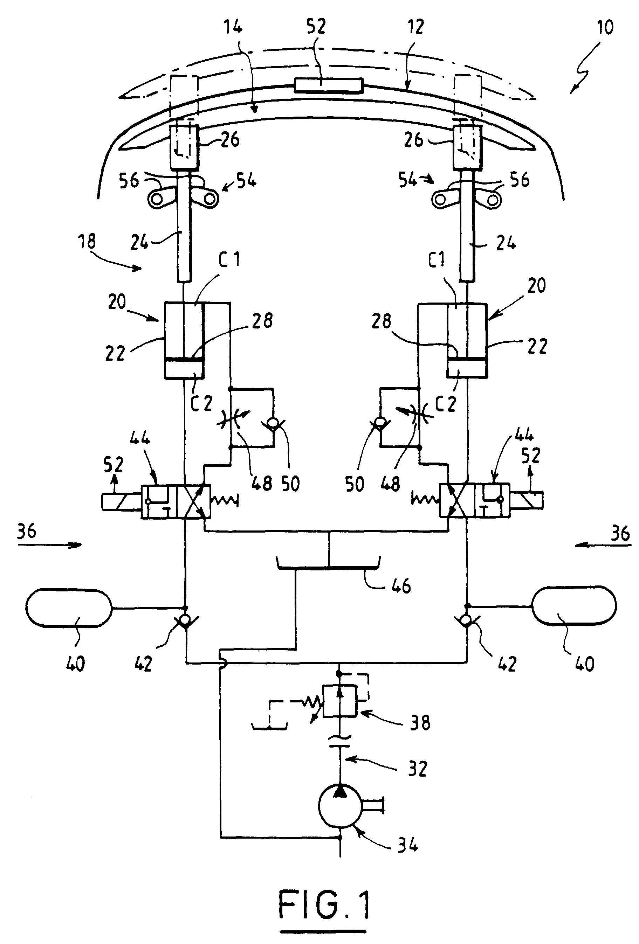

On a représenté sur la figure 1 un pare-chocs 10 agencé à l'avant d'un véhicule automobile. De façon classique, le pare-chocs 10 comporte une peau 12 ou coque portée par une poutre 14.

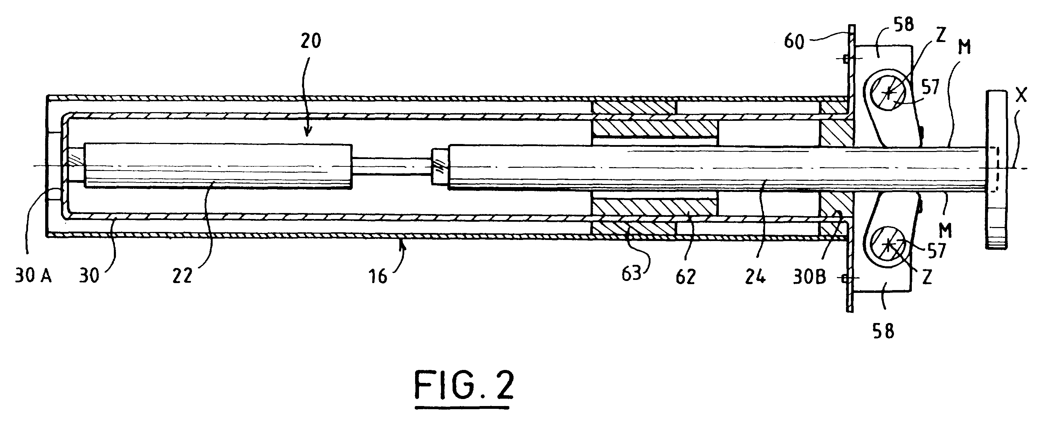

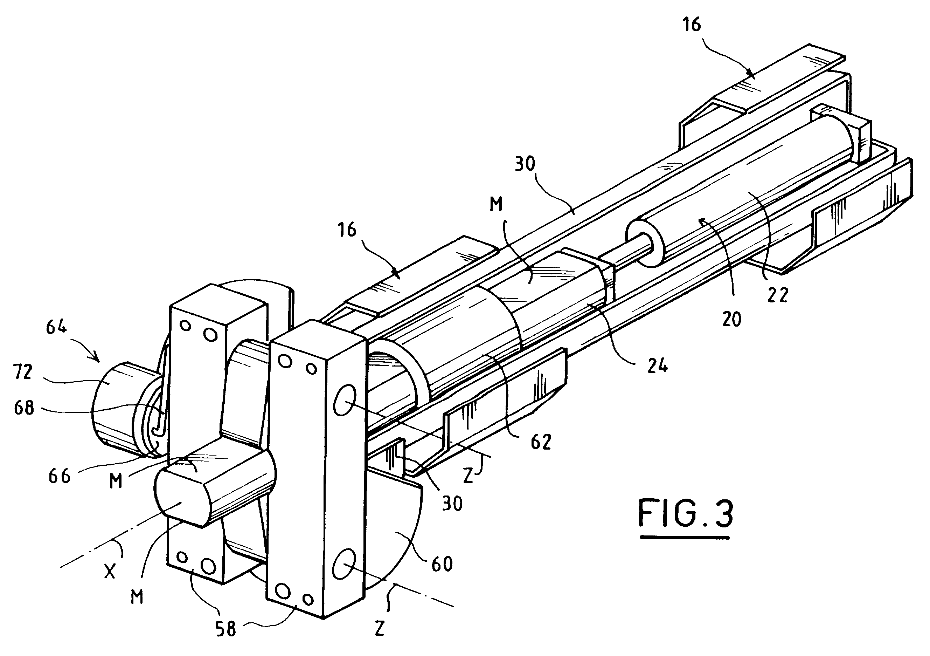

Cette poutre 14 est reliée à deux longerons fixes 16 du véhicule, dont un seul est représenté partiellement sur les figures 2 et 3, par des moyens 18 de déplacement longitudinal de cette poutre.

Les moyens de déplacement 18 comprennent deux vérins hydrauliques 20 à double effet portés par les deux longerons 16. De préférence, chaque vérin 20 est logé à l'intérieur de l'extrémité avant du longeron 16, comme cela est représenté sur les figures 2 et 3.

Chaque vérin est muni d'une extrémité fixe, formant corps 22, reliée au longeron 16 correspondant, et d'une extrémité mobile, formant tige 24, reliée à la poutre 14 par l'intermédiaire d'un organe classique 26 d'absorption d'énergie.

Le corps 22 délimite deux chambres C1,C2 de volumes variables, séparées par un piston 28 solidaire de la tige 24.

En se référant notamment aux figures 2 et 3, on voit que le corps 22 des vérins est porté par un boîtier 30 fixé et logé à l'intérieur du longeron 16 correspondant. Ce boîtier 30, de forme générale cylindrique, comporte une extrémité arrière 30A fermée et une extrémité avant 30B ouverte pour permettre le passage de la tige 24 du vérin 20 porté par ce boîtier.

La tige 24 des vérins 20 est déplaçable entre des première et seconde positions, respectivement, de repos et de déploiement de la poutre 14. Sur la figure 1, on a représenté, en traits continus, la première position de repos de la poutre, et en traits mixtes, la seconde position de déploiement de cette poutre.

Les vérins 20 sont actionnés par le liquide sous pression d'un circuit hydraulique primaire 32 du véhicule. De préférence, ce circuit primaire 32 est un circuit hydraulique de direction assistée du véhicule dont on a représenté une pompe 34 sur la figure 1.

Les deux vérins 20 sont commandés par deux circuits hydrauliques secondaires 36 respectifs identiques. Ces circuits secondaires 36 sont raccordés au circuit hydraulique primaire 32 par l'intermédiaire d'un compresseur-détendeur 38 commun disposé en aval de la pompe 34.

Chaque circuit secondaire 36 comporte un accumulateur de pression 40 raccordé au compresseur-détendeur 38 par l'intermédiaire d'un clapet anti-retour 42.

L'accumulateur de pression 40 est raccordé alternativement à une ou deux chambres C1,C2 du vérin 20 correspondant par l'intermédiaire d'un distributeur 44, notamment du type à tiroir, à quatre orifices et deux positions de repos et active respectivement. En variante, le distributeur peut être d'un autre type, par exemple du type à clapet.

Lorsque le distributeur 44 est en position de repos, une première chambre C1 du vérin correspondant est raccordée à l'accumulateur de pression 40 et la seconde chambre C2 de ce vérin est raccordée à un réservoir de refoulement 46 commun aux deux circuits secondaires 36. Ce réservoir 46 est lui-même raccordé à l'amont de la pompe 34 du circuit primaire 32.

Lorsque le distributeur 44 est en position active, les deux chambres C1,C2 du vérin correspondant sont raccordées à l'accumulateur de pression 40.

On notera que, quelle que soit la position du distributeur 44, la première chambre C1 du vérin correspondant est raccordé à l'accumulateur de pression 40, par l'intermédiaire d'un régulateur de débit 48. Un clapet anti-retour 50 est raccordé en dérivation à l'amont et à l'aval de ce régulateur 48.

Les distributeurs 44 des circuits secondaires 36 sont commandés par une unité centrale commune 52 de gestion des déplacements de la poutre 14, détectant notamment les risques de chocs. Cette unité centrale 52 comporte par exemple un radar placé sur le pare-chocs 10 et des moyens électroniques de gestion d'informations.

Le retour intempestif de la tige 24 vers sa première position est interdit, notamment lorsque la poutre 14 subit un choc, grâce à des moyens anti-retour 54 comprenant, de préférence, deux cames de blocage 56 entre lesquelles s'étend la tige 24.

En se référant notamment aux figures 2 à 5, on voit que les cames de blocage 56 sont articulées autour d'axes fixes Z sensiblement perpendiculaires à l'axe X de la tige.

Les axes Z sont matérialisés par des broches d'articulation 57 portées par une paire de blocs 58 solidaires d'une collerette 60 délimitant l'extrémité ouverte 30B du boîtier.

Les cames de blocage 56 coopèrent avec la tige 24, de préférence avec deux méplats M sensiblement diamétralement opposés de cette tige (voir figures 2 et 3), de manière à, d'une part, serrer entre elles la tige 24 pour la bloquer par effet d'arc-boutement, lorsque cette tige 24 est sollicitée vers sa première position, et d'autre part, s'écarter librement entre elles, lorsque cette tige 24 se déplace vers sa seconde position.

De préférence, afin de faciliter les déplacements de la tige 24, le boîtier 30 comporte des moyens de guidage classiques 62 coopérant avec des portions de contour circulaire de la tige 24 s'étendant entre les méplats M. Ces moyens de guidage 62 comprennent, par exemple, une douille à billes.

Un renfort annulaire 63 est agencé entre le longeron 16 et le boîtier 30, au droit des moyens de guidage 62, de manière à s'opposer aux efforts radiaux auxquels est soumise la tige 24 lors d'un choc.

Des moyens de libération des moyens anti-retour 54 autorisent le retour contrôlé de la tige 24 vers sa première position. Ces moyens de libération comprennent des moyens 64 d'écartement forcé des cames de blocage 56 représentés sur les figures 3 à 5.

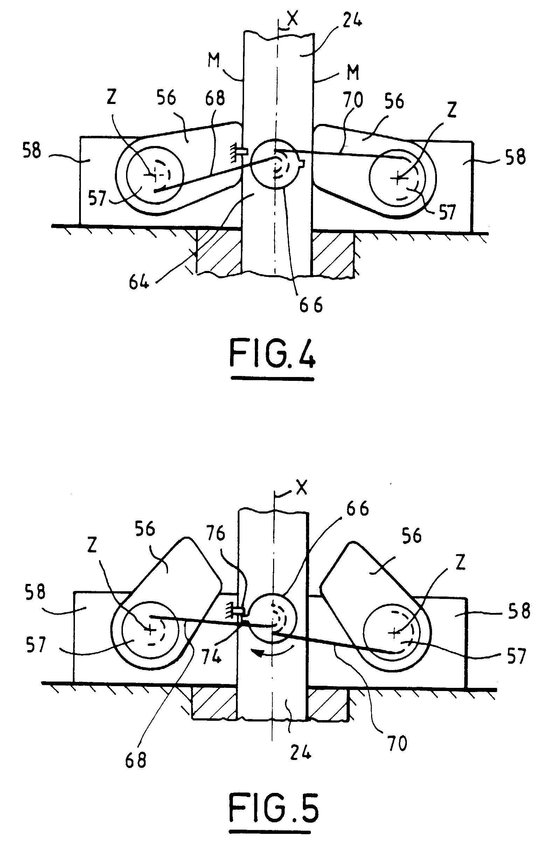

Les moyens d'écartement 64 comprennent une platine rotative 66 couplée par deux tringleries 68,70 de transmission de mouvement aux deux cames de blocage. La platine 66 est déplaçable au moyen d'un organe d'entraînement 72, par exemple un électro-aimant, entre une position de serrage de la tige par les cames 56, telle que représentée sur la figure 4, et une position d'écartement des ces cames 56, telle que représentée sur la figure 5. La platine 66 se déplace d'une position à l'autre en effectuant, par exemple, un demi-tour.

De préférence, la platine 66 comporte une butée de positionnement 74 destinée à coopérer avec une butée fixe complémentaire 76 lorsque cette platine 66 est dans la position d'écartement des cames 56 telle que représentée sur la figure 5, afin de limiter cet écartement.

Lorsque les cames de blocage 56 sont en position de serrage, l'organe d'entraînement 72 exerce un couple résistant s'opposant à l'écartement de ces cames 56, de manière à maintenir ces dernières en contact avec la tige 24.

On décrira ci-dessous les principales étapes de fonctionnement du pare-chocs 10.

Initialement, les tiges 24 des vérins et les distributeurs 44 sont dans leur position de repos telle qu'illustrée sur la figure 1. Les cames 56 sont en contact avec les tiges 24.

Lorsque l'unité centrale 52 détecte un risque de choc, elle commande les distributeurs 44 en position active, ce qui a pour effet de déplacer les tiges 24 en position de déploiement de la poutre 14.

En cas de choc effectif sur le pare-chocs 10, la poutre est maintenue dans sa position de déploiement grâce aux cames de blocage 56 qui s'opposent au retour des tiges 24 vers leur position de repos.

L'allongement du véhicule, résultant du déploiement de la poutre 14, permet d'augmenter les capacités d'absorption d'énergie du pare-chocs. Cet allongement permet notamment, lors d'un choc avant à une vitesse pouvant atteindre 15 km/h, d'absorber l'énergie du choc par déformation élastique et plastique de la poutre 14, des organes d'absorption d'énergie 26 et des moyens de déplacement 18, ceci sans déformer les longerons 16. La poutre 14, les organes d'absorption d'énergie 26 et les moyens de déplacement 18, pourront être remplacés à la suite du choc.

En l'absence de choc, ou à la suite d'un faible choc n'endommageant pas les vérins 20, la poutre 14 est ramenée dans sa position de repos, de façon automatique ou à l'initiative du conducteur. A cet effet, les moyens 64 d'écartement des cames 56 sont actionnés de manière à autoriser le retour des tiges 24 dans leurs position de repos. Par ailleurs, l'unité centrale 52 commande le retour des distributeurs 44 en position de repos, ce qui a pour effet de ramener les tiges 24 et la poutre 14 dans leur position de repos.

Bien entendu, l'unité centrale 52 peut piloter, à la fois, les actionneurs 44 et les moyens 64 d'écartement forcé des cames de blocage.

L'invention ne se limite pas au mode de réalisation décrit ci-dessus.

En particulier, les vérins peuvent être des vérins fluidiques du type à gaz sous pression. Dans le cas d'un pare-chocs agencé sur un poids lourd, le gaz des vérins peut être fourni par une centrale d'air comprimé.

Parmi les avantages de l'invention, on notera que celle-ci permet de protéger efficacement les organes essentiels du véhicule, notamment les longerons de ce dernier, lors d'un choc se produisant à une vitesse pouvant atteindre 15 km/h, ceci au moyen d'un pare-chocs déployable à l'aide de vérins hydrauliques simples, peu volumineux et de faibles coûts.

Les moyens anti-retour de la tige des vérins empêchent, lors d'un choc, la transmission d'efforts au circuit hydraulique de commande du vérin de manière à le protéger.

## Revendications

1. Agencement d'une poutre (14) de pare-chocs (10) dans un véhicule automobile, du type dans lequel la poutre (14) est reliée à un support fixe (16) du véhicule par des moyens (18) de déplacement longitudinal de cette poutre (14) comportant au moins un vérin fluidique (20) muni d'une extrémité fixe, formant corps (22), reliée au support fixe (16), et d'une extrémité mobile, formant tige (24), reliée à la poutre (14), la tige (24) étant déplaçable entre des première et seconde positions respectivement de repos et de déploiement de la poutre (14), **caractérisé en ce qu**'il comporte des moyens anti-retour (54) interdisant le retour intempestif de la tige (24) vers sa première position, notamment lorsque la poutre (14) subit un choc, et des moyens de libération des moyens anti-retour (54) pour autoriser le retour contrôlé de la tige (24) vers sa première position.

2. Agencement selon la revendication 1, caractérisé en ce que les moyens anti-retour (54) comprennent deux cames de blocage (56) articulées autour d'axes fixes (Z), entre lesquelles s'étend la tige (24) du vérin, ces cames de blocage (56) coopérant avec la tige (24), de préférence avec deux méplats (M) sensiblement diamétralement opposés de cette tige, de manière à, d'une part, s'écarter entre elles librement lorsque la tige se déplace vers sa seconde position, et d'autre part, serrer la tige entre elles pour la bloquer par effet d'arc-boutement lorsque cette tige est sollicitée vers sa première position.

3. Agencement selon la revendication 2, caractérisé en ce que les moyens de libération comprennent des moyens (64) d'écartement forcé des cames de blocage (56).

4. Agencement selon la revendication 3, caractérisé en ce que les moyens d'écartement (64) comprennent une platine rotative (66) couplée par deux tringleries (68,70) de transmission de mouvement aux deux cames de blocage (56) respectivement, la platine (66) étant déplaçable, au moyen d'un organe d'entraînement (72), notamment un électroaimant, entre des positions d'écartement et de serrage des cames de blocage (56), l'organe d'entraînement (72) exerçant un couple résistant s'opposant à l'écartement des cames de blocage (56) lorsque celles-ci sont en position de serrage.

5. Agencement selon l'une quelconque des revendications précédentes, caractérisé en ce que le vérin (20) est un vérin hydraulique à double effet actionné par le liquide sous pression d'un circuit hydraulique primaire (32) du véhicule, notamment un circuit hydraulique de direction assistée du véhicule.

6. Agencement selon la revendication 5, caractérisé en ce que le vérin (20) est commandé par un circuit hydraulique secondaire (36) raccordé au circuit hydraulique primaire (32) par l'intermédiaire d'un compresseur-détendeur (38).

7. Agencement selon la revendication 6, caractérisé en ce que le circuit hydraulique secondaire (36) comporte un accumulateur de pression (40) raccordé alternativement à une ou deux chambres (C1,C2) du vérin (20), par l'intermédiaire d'un distributeur (44) commandé par une unité centrale (52) de gestion des déplacements de la poutre (14).

8. Agencement selon la revendication 6 ou 7, caractérisé en ce que les moyens (18) de déplacement longitudinal de la poutre (14) comprennent deux vérins hydrauliques (20) commandés par deux circuits hydrauliques secondaires (36) respectifs identiques raccordés au circuit hydraulique primaire (32) par un compresseur-détendeur (38) commun.

9. Agencement selon l'une quelconque des revendications précédentes, caractérisé en ce que le vérin (20), ou chaque vérin (20), est porté par un longeron (16) du véhicule, et, de préférence, est logé à l'intérieur de ce longeron (16).
